# FASCICULE DE BREVET EUROPEEN

(11) **EP 2 380 427 B1**
(45) Date de publication et mention de la délivrance du brevet: **26.12.2012**
(21) Numéro de dépôt: 11358004.7
(22) Date de dépôt: 18.04.2011
(51) Int. Cl.: A01D 34/90, A45F 3/14

(54) **Harnais pour le portage d'appareils de coupe portatifs, et appareils de coupe équipés d'un tel harnais**
Gurtwerk zum Tragen von tragbaren Schneidegeräten, und mit einem solchen Gurtwerk ausgestattete Schneidegeräte
Harness for carrying portable cutting devices, and cutting devices provided with such a harness.

(30) Priorité: 21.04.2010 FR 1001688
(43) Date de publication de la demande: 26.10.2011
(73) Titulaire: Pellenc SA, 84120 Pertuis (FR)
(72) Inventeur: Pellenc, Roger, 84120 Pertuis (FR)
(74) Mandataire: Marek, Pierre

(56) Documents cités:
- EP-A2- 0 826 324
- CA-A1- 2 424 778
- US-A1- 2002 116 825
- US-A1- 2010 000 097

## Description

La présente invention concerne un harnais pour le portage d'appareils de coupe portatifs. Elle vise également les appareils de coupe portatifs équipés d'un tel harnais.

L'invention est du domaine des appareils de coupe portatifs à manche long utilisés pour les activités agricoles et forestières, tels que coupe-herbe, coupe-bordure, débroussailleuse, taille-haie et analogues. L'invention se rapporte plus particulièrement à un appareil de coupe portatif comprenant un manche, une tête de coupe et un moteur électrique installés à la partie distale de ce manche et un harnais de suspente à trois points.

Dans le domaine des activités agricoles et forestières, on connaît des appareils de coupe portatifs pour le fauchage, le débroussaillage ou autres travaux analogues pratiqués au sol par un opérateur à pied. De tels appareils comportent un manche long muni, à son extrémité distale, d'un outil de coupe, tel qu'un outil de coupe rotatif ou à chaîne entraînée en boucle sur elle-même. La motorisation de l'outil de coupe est couramment réalisée par un moteur thermique, qui est placé à l'extrémité proximale du manche ou extrémité dudit manche opposée à celle sur laquelle est installé l'outil de coupe. Une autre solution consiste à motoriser l'outil de coupe à partir d'un moteur électrique, réputé plus léger, qui est avantageusement porté par le manche à proximité immédiate de l'outil de coupe. Le manche est doté d'une ou de plusieurs poignées pour sa préhension et pour permettre à l'opérateur de manier l'appareil, en effectuant des mouvements de balayage et/ou d'approche de l'outil de coupe vers les végétaux à couper, et d'une poignée de commande installée à l'extrémité proximale dudit manche.

Le caractère long du manche est destiné à permettre à l'opérateur d'effectuer les opérations de coupe en station debout et en étant éloigné de la zone de travail, qui est habituellement située au sol ou sensiblement à hauteur d'homme. Dans le cas de moteurs thermiques lourds, bruyants, et encombrants la maniabilité de l'appareil est difficile, ce qui induit un surcroit de fatigue pour l'opérateur. Le manche étant porteur du moteur d'entraînement de l'outil de coupe à l'une de ses extrémités, l'appareil est pesant et est inconfortable à porter par l'opérateur, en rendant sa manoeuvre pénible. Pour palier cet inconvénient, il est courant que le manche soit muni d'un accessoire de portage et de soutien à la ceinture, permettant à l'opérateur de placer l'appareil, en appui contre sa hanche ou sur sa cuisse, pour faciliter le port et la manoeuvre de l'appareil ; le portage à la hanche permet de placer le moteur derrière l'utilisateur et, de ce fait, il autorise l'évacuation des gaz et des bruits à l'arrière dudit utilisateur.

Dans le même but, il est courant d'utiliser des harnais de portage positionnables sur le buste des opérateurs, pour les soulager d'avoir non seulement à manier mais aussi à porter à bout de bras l'appareil. De tels harnais comprennent, par exemple, une partie dorsale et une partie ventrale reliées l'une à l'autre par des bretelles, ils comportent également une ceinture, et ladite partie avant est agencée pour pouvoir être fixée à un moyen d'accrochage équipant le manche des appareils. Des harnais de portage de ce genre sont par exemple décrits dans les documents EP0826324 (STIHL MASCHF ANDREAS) ou W02008147259 (HUSQVARNA AB et al.). Ces harnais associent une partie dorsale propre à être disposée contre le dos de l'opérateur, et une partie ventrale propre à être placée contre le torse et/ou l'abdomen de l'opérateur. Ces parties dorsale et ventrale sont reliées l'une à l'autre par des bretelles prenant appui sur les épaules de l'opérateur. Ces harnais comprennent encore une ceinture et leur partie ventrale est agencée pour pouvoir être fixée sur un moyen d'accrochage équipant le manche des appareils. Il est aussi connu d'agencer la partie dorsale des harnais pour recevoir un moteur d'entraînement relié à la tête de coupe de l'appareil, par exemple au moyen d'un flexible.

Pour manier l'appareil, l'opérateur maintient le manche latéralement pour effectuer les mouvements de manoeuvre et/ou de guidage de l'outil de coupe, ce qui lui permet le cas échéant de placer l'appareil en appui sur sa hanche ou sur sa cuisse pour faciliter ces opérations.

Le but de la présente invention est d'améliorer le confort de l'opérateur, en proposant un tel harnais dont l'organisation procure un portage confortable et une maniabilité optimisée de l'appareil, et favorise l'appréhension par l'opérateur de son environnement de travail. L'agencement du harnais de la présente invention est particulièrement adapté pour le soutien d'un appareil à manche long dont l'outil de coupe est à motorisation électrique, tel qu'un outil rotatif ou à chaîne entraînée en boucle sur elle-même.

Plus particulièrement, ce harnais est du genre structurellement organisé pour répondre aux besoins spécifiques de facilité de port à dos et de maniabilité de l'appareil par l'opérateur. Selon une application spécifique du harnais proposé par la présente invention, son organisation procure notamment un intérêt dans le cadre d'une application au port et à la manoeuvre d'un appareil de coupe à manche long et à motorisation électrique, selon lequel un moteur électrique est porté en bout du manche à proximité de l'outil de coupe pour son entraînement, en étant alimenté en énergie à partir d'une source d'énergie électrique montée sur la partie dorsale du harnais.

Selon une première disposition caractéristique de l'invention, la partie frontale du harnais comporte une suspente pendulaire présentant la forme générale d'un Y dont les branches supérieures sont reliées ou aptes à être reliées, chacune, à une bretelle, par l'intermédiaire de leur extrémité haute, et dont la jambe inférieure est munie, à son extrémité basse, d'un moyen ou organe de liaison permettant l'accrochage en balancier du manche de l'appareil de coupe.

Selon un mode d'exécution intéressant, le harnais de la présente invention comprend une partie dorsale et une partie ventrale qui sont reliées entre elles par au moins un couple de bretelles, au moins la partie dorsale du harnais étant rattachée à une ceinture et la partie ventrale dudit harnais, lequel comprend encore une suspente pendulaire en trois points constituée d'au moins trois sangles dont deux sangles supérieures reliées ou aptes à être reliées chacune à une bretelle, par l'intermédiaire de leur extrémité haute, et une troisième sangle inférieure reliant l'extrémité basse des deux sangles supérieures et dont l'extrémité basse est munie d'un moyen de fixation permettant de la fixer sur un moyen d'accrochage équipant le manche d'un appareil de coupe, de sorte à permettre à l'utilisateur de manoeuvrer ledit appareil de coupe aussi bien horizontalement que verticalement.

Le harnais est organisé pour être spécifiquement exploitable dans le cadre du port et de la manoeuvre d'un appareil de coupe portatif et motorisé à manche long, en permettant structurellement de reporter au moins en partie le poids de l'appareil sur l'une au moins des épaules de l'opérateur.

De manière avantageuse, les extrémités adjacentes des trois sangles ou parties composantes constituant la suspente pendulaire sont reliées au moyen d'un dispositif de liaison commun avec une possibilité d'orientation variée les unes par rapport aux autres. Autrement dit, le dispositif de portage se présente sous la forme d'un Y articulé au niveau du point de rencontre de ces trois branches.

De préférence, le système de liaison commun est constitué par un anneau sur lequel sont fixées, avec une possibilité de glissement, les extrémités adjacentes des trois branches constituant le Y articulé.

A cet effet, les extrémités adjacentes des trois branches constituant le Y articulé sont par exemple constituées sous forme de boucles coulissantes, traversées par l'anneau de liaison.

Grâce à cette disposition, on obtient une modification instantanée, en cours de travail, de l'orientation relative des trois parties constituantes du Y.

Selon une autre disposition caractéristique, les deux branches supérieures du dispositif ventral de suspension sont munies de moyens, connus en soi, permettant un ajustement de leur longueur en fonction de la corpulence des opérateurs. Selon un autre mode d'exécution, la sangle inférieure du dispositif de portage est munie d'un moyen permettant un ajustement de sa longueur en fonction de la taille de l'opérateur.

Dans le cadre particulièrement adapté d'une application du harnais au port et à la manoeuvre d'un appareil de coupe à manche long et à motorisation électrique, la partie dorsale du harnais forme avantageusement un support d'une source d'énergie électrique, telle qu'une batterie rechargeable, reliée à un connecteur de raccordement au moteur électrique de l'appareil de coupe. La partie dorsale du harnais est notamment munie d'au moins un organe de soutien d'une telle réserve d'énergie, constitué par exemple d'une platine de fixation ou d'organes de prise aptes à coopérer avec des organes de prise équipant la source d'énergie, tels que des anneaux coopérant avec des mousquetons ou autres organes de fixation analogues.

La démarche de la présente invention consiste, dans sa globalité, à pourvoir la partie ventrale du harnais d'un dispositif ventral de suspension rapporté frontalement sur le harnais de manière pendulaire. Ce dispositif ventral de suspension est, de préférence, facilement amovible. Le dispositif ventral de suspension est en prise sur la partie ventrale du harnais en des zones latéralement distantes. De tels moyens de jonction mettent par exemple en oeuvre des organes coopérants de fixation tels que des anneaux, des mousquetons, boucles de blocage ou organes analogues, et/ou brins d'extrémités des sangles ventrales. Les sangles ventrales supérieures sont maintenues à distance latérale l'une de l'autre sur la partie ventrale du harnais par l'intermédiaire de leur extrémité haute, leurs autres extrémités ou extrémité basse étant jointes l'une à l'autre à l'extrémité haute de la sangle inférieure. Cette sangle inférieure est munie, à son extrémité basse, d'un organe d'accrochage permettant sa fixation à un organe d'attache équipant le manche ou tube de liaison de l'appareil de coupe, pour obtenir un port en balancier dudit appareil à partir du montage pendulaire du dispositif ventral de suspension sur la partie ventrale du harnais.

En position de travail, l'opérateur peut maintenir l'appareil latéralement au moyen des poignées de préhension dont est équipé le manche. En outre et grâce aux dispositions de la présente invention, l'appareil est soutenu à dos par l'opérateur de manière équilibrée à partir des deux poignées distantes de la partie ventrale, et notamment sur l'une et l'autre des bretelles. Cet équilibrage des efforts que supporte l'opérateur permet de sécuriser les conditions d'utilisation de l'appareil, et de le soulager en répartissant ces efforts sur chacune des épaules de l'opérateur, avec un confort d'utilisation accru et une fatigue amoindrie. De surcroît et à partir du port en balancier de l'organe d'accrochage par l'intermédiaire de la partie avant montée pendulaire sur le harnais, l'opérateur peut amener l'appareil depuis sa position latérale vers une position frontale dans laquelle l'appareil est placé face à lui. Ce changement de position de l'appareil est procuré à partir de l'accrochage du manche au harnais par l'intermédiaire de la partie avant, qui est en prise frontale sur ladite partie du harnais.

Grâce à l'invention, le manche de l'appareil, en totalité, est apte à être déplacé depuis sa position latérale vers une position avant de l'opérateur, et inversement, selon la nature des travaux à effectuer et la position de l'opérateur par rapport à la zone de travail. La mise en position frontale de la totalité de l'appareil permet d'équilibrer davantage les efforts répartis sur l'une et l'autre des épaules de l'opérateur, en soulageant celui-ci du port à bout de bras dudit appareil. En fonction de la zone de travail, l'opérateur peut déplacer l'appareil dans un mouvement de va et vient en translation frontale. L'appareil étant placé à l'avant de l'opérateur, celui-ci peut se placer face à la zone de travail avec pour avantage d'équilibrer les efforts répartis sur l'une et l'autre de ses épaules, et de disposer d'un champ visuel optimisé sur la zone de travail à laquelle il fait face, tant latéralement dans un plan horizontal que verticalement par rapport au sol. Une manoeuvre ascendante de l'outil de coupe est aisée à réaliser, les efforts induits étant principalement répercutés et répartis sur les épaules de l'opérateur. La pénibilité du travail effectué est réduite au regard d'une position de travail habituelle dans laquelle l'appareil est porté latéralement par l'opérateur, et la position frontale de travail procure à l'opérateur une meilleure visibilité de la zone de travail et une efficacité accrue. Le périmètre de travail est optimisé, tant horizontalement que verticalement grâce à la mise en position frontale de l'appareil et son port équilibré par son appui sur les épaules de l'opérateur.

Selon une caractéristique générale de la présente invention, un harnais tel que défini précédemment comportant une partie dorsale, une partie avant, des bretelles et une ceinture de jonction entre lesdites parties dorsales et avant, est principalement remarquable en ce que l'organe d'accrochage (par exemple anneau) dont est équipé le manche de l'appareil est suspendu en balancier au harnais par l'intermédiaire de la suspente incluse dans la partie avant de ce dernier. Cette suspente avant est globalement agencée pour permettre la suspension pendulaire de l'appareil sur le harnais. Ladite suspente est notamment reconnaissable en ce qu'elle est globalement conformé en Y, les extrémités libres des branches du Y étant distantes l'une par rapport à l'autre. L'organe d'accrochage est mobile en éloignement frontal en étant maintenu attaché sur le harnais par l'intermédiaire du montage en Y.

Selon une forme simple de réalisation du montage en Y, celui-ci associe une paire de sangles supérieures qui sont en prise, par l'intermédiaire de leur extrémité haute, avec les bretelles du harnais, à distance latérale l'une de l'autre. Ces extrémités hautes des sangles supérieures sont opposées à leurs autres extrémités par l'intermédiaire desquelles elles sont assemblées. Plus particulièrement, les sangles supérieures sont assemblées l'une à l'autre à leur extrémité opposée à leur extrémité haute de mise en prise sur les bretelles du harnais au moyen d'une sangle de suspension inférieure, qui est munie, à son extrémité basse opposée, d'un moyen d'accrochage.

Les extrémités hautes correspondantes des sangles supérieures sont de préférence en prise sur une bretelle respective de la partie avant du harnais à laquelle elles sont affectées.

Selon une forme préférée de réalisation, l'une quelconque au moins des sangles supérieures et de la sangle de suspension est à longueur ajustable, pour permettre à l'opérateur d'ajuster leur longueur selon le confort souhaité en fonction de sa position de travail et/ou de la nature du travail à effectuer.

La suspente pendulaire peut être avantageusement montée de manière amovible sur la partie avant du harnais, pour permettre à l'opérateur d'installer, ou inversement de retirer, facilement ladite suspente de la partie avant du harnais.

Les sangles avant sont de préférence en prise sur la partie avant du harnais par l'intermédiaire d'organes coopérants d'attache facilement réversibles. Ces organes d'attaches coopérants sont respectivement affectés à chacune des sangles avants et à la partie avant du harnais en ses dites prises latéralement distantes.

Selon une forme de réalisation, les sangles avants sont des sangles indépendantes dont les extrémités libres sont chacune en prise sur la partie avant du harnais, et dont les autres extrémités sont solidaires ou attachées l'une à l'autre.

Selon une autre forme de réalisation, les branches supérieures de la suspente pendulaire sont constituées des deux brins d'une même sangle qui est montée coulissante sur l'organe de jonction.

Les buts, caractéristiques et avantages ci-dessus, et d'autres encore, ressortiront mieux de la description qui suit et des dessins annexés dans lesquels :
La fig.1 est une illustration en perspective arrière éclatée d'un harnais selon une forme préférée de réalisation de la présente invention.
La fig.2 est une illustration frontale assemblée du harnais représenté sur la fig.1.
Les fig.3, 4 et 5 illustrent différentes positions de travail exécutées par un opérateur au moyen d'un appareil de coupe suspendu au harnais revendiqué.

On décrit ci-après un exemple de réalisation avantageux mais non limitatif, du harnais de suspension, selon l'invention.

Dans la description qui suit et dans les revendications les mots « supérieur », « inférieur », « haute », « basses » sont utilisés en référence avec la position de l'appareil de coupe en cours de travail ; ces termes n'ont aucun caractère limitatif.

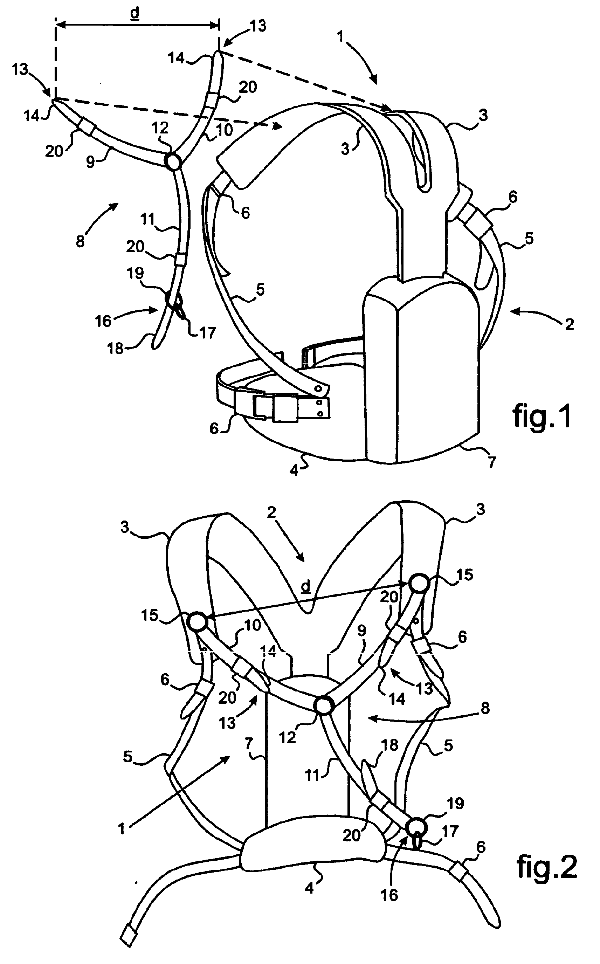

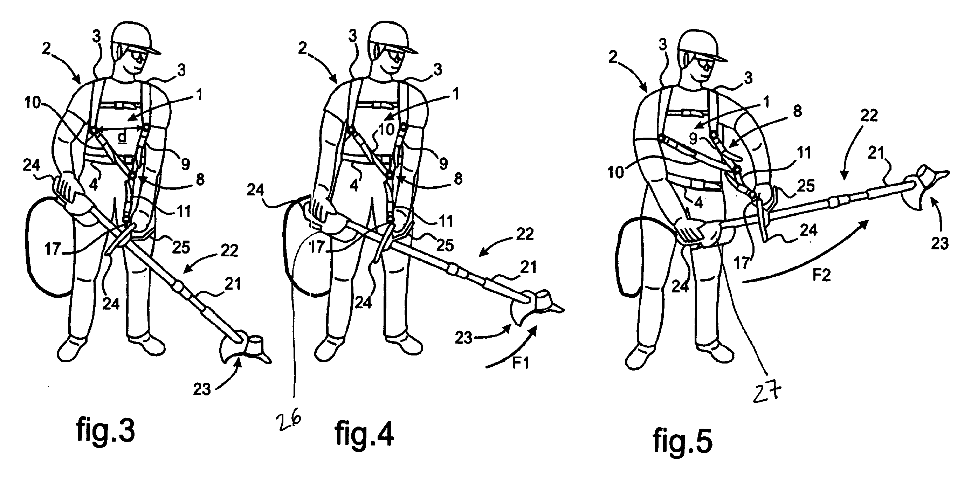

Sur les fig.1 et fig.2, est représenté un harnais agencé pour être porté par un opérateur à pied, en vue de soutenir un appareil de coupe portatif à manche long dirigé à la main par l'opérateur. On se reportera, par ailleurs, aux fig.3 à fig.5 qui illustrent différentes positions possibles de l'appareil de coupe soutenu par le harnais, en situation de travail, et qui représente un opérateur équipé de ce harnais et qui est porteur d'un tel appareil en situation de travail.

Le harnais comporte principalement une partie avant ou partie frontale 1 et une partie dorsale arrière 2, qui sont destinées à être respectivement placées sur le torse et sur le dos de l'opérateur. Ces parties frontale 1 et dorsale 2 sont reliées l'une à l'autre par un couple de bretelles 3 qui s'étendent entre l'avant et l'arrière du harnais de l'une à l'autre des parties frontale 1 et dorsale 2. Ces bretelles 3 sont conformées pour prendre appui sur les épaules d'un opérateur OP. Le harnais comporte encore une ceinture 4 destinée à entourer la taille de l'opérateur. La partie dorsale 2 est ancrée sur cette ceinture 4. La partie frontale 1 peut être reliée à des sangles latérales 5 ancrées sur les bretelles 3 et sur la ceinture 4 dans la zone arrière de celle-ci. Ces sangles latérales 5 sont agencées pour s'étendre depuis la partie frontale 1 vers la partie dorsale 2 en s'étendant contre les flancs de l'opérateur.

La ceinture 4 et les sangles latérales 5 sont préférentiellement munies d'organes 6, connues en soi, de réglage de leur longueur, par coulissement et blocage par exemple.

La partie dorsale 2 est avantageusement agencée pour porter une source d'énergie électrique 7, pour l'alimentation en énergie d'un moteur électrique d'actionnement de l'outil de coupe que comprend l'appareil. Le moteur et l'outil de coupe sont placés à la partie distale du manche, pour permettre à l'opérateur de travailler au sol ou à hauteur d'homme en étant en station debout, tel qu'illustré sur les fig.3 à fig.5.

Selon une disposition caractéristique de l'invention, la partie avant du harnais comprend une suspente pendulaire 8. Cette suspente pendulaire est globalement conformée en Y, dont chacune des parties composantes, jambe et branches, sont formées de sangles 9, 10, 11 assemblées entre elles à leur extrémité adjacente, dans la zone de jonction desdites parties composantes du Y. Un tel assemblage peut être avantageusement réalisé au moyen d'un organe approprié de jonction, par exemple constitué par un anneau 12, ce qui permet une fixation glissante des extrémités ainsi assemblées desdites parties composantes sur l'anneau de jonction. Les deux branches du Y sont formées par deux sangles ventrales supérieures 9, 10 dont l'extrémité haute 13 est fixée ou apte à être fixée sur la partie frontale 1. Les extrémités hautes 13 des sangles ventrales 9, 10 sont plus précisément fixées à la partie avant d'une bretelle 3 respective, à distance latérale d l'une de l'autre. Une telle fixation est réalisée, de manière connue en soi, au moyen d'organes d'attaches coopérants 14, 15 facilement réversibles, qui sont respectivement affectés à chacune des sangles ventrales supérieures 9, 10 et aux bretelles 3. De tels organes d'attache 14, 15 sont, par exemple, constitués d'un anneau coopérant avec le brin d'extrémité libre des sangles ventrales, ou autres organes coopérants indifféremment affectés aux sangles ventrales 9, 10 et/ou aux bretelles 3.

La jambe du Y est formée par une sangle inférieure de suspension 11 en prise sur l'organe d'assemblage 12 des sangles 9, 10, de la suspente 8. L'extrémité libre 16 de la sangle inférieure de suspension 11 est munie d'un organe d'accrochage 17, tel qu'agencé en mousqueton ou analogue. Cet organe d'accrochage 17 est destiné à relier le harnais à un organe de suspension équipant la portion intermédiaire du manche de l'appareil, en vue de son soutien en balancier, par l'opérateur, obtenu à partir du montage pendulaire de la suspente 8 sur la partie ventrale 1.

L'organe d'accrochage 17 est rapporté sur la sangle de suspension 11 indifféremment de manière fixe ou de manière facilement amovible au moyen d'organes coopérants d'attache 18, 19 qui sont respectivement affectés à la sangle de suspension 11 et à l'organe d'accrochage 17. De tels organes coopérants d'attache 18, 19 sont, par exemple, constitués d'un anneau coopérant avec le brin d'extrémité basse de la sangle de suspension 11, ou autres organes coopérants indifféremment affectés à la sangle de suspension 11 et à l'organe d'accrochage 17. Les éléments supérieurs 9, 10 et/ou l'élément inférieur 11 de la suspente pendulaire 8, sont avantageusement, chacun, équipés d'organes de réglage 20 de leur longueur, par coulissement et blocage, par exemple. La suspente 8 ainsi composée est montée frontalement et, de préférence, de manière amovible, sur la partie avant du harnais, en étant portée par ce dernier de manière pendulaire.

Selon un autre mode de réalisation, les deux branches ou éléments supérieurs 9, 10, de la suspente pendulaire, peuvent être constitués par les deux brins d'une même sangle montée coulissante, sur l'organe de jonction 12.

L'invention concerne également les appareils de coupes portatifs 22 du genre coupe-herbe, coupe-bordure, débroussailleuse, taille-haie, ... , comportant un manche ou tube de liaison allongé 21, un outil de coupe 23 et un moteur électrique installé à l'extrémité distale de ce manche, lequel est muni, dans sa partie intermédiaire, d'une ou plusieurs poignées de manoeuvre 24 et d'un organe de fixation permettant la suspension en balancier dudit appareil à l'extrémité inférieure de la suspente 8 du harnais décrit ci-dessus. La poignée de commande 26 du fonctionnement du moteur électrique 27 d'actionnement de la tête de coupe 23 de l'appareil, est installé au sommet ou partie proximale du tube de liaison ou manche 21. De manière avantageuse, le moteur électrique peut être constitué par un moteur électrique, sans balais (couramment appelé moteur électrique Brushless), de forte puissance (au moins 800 W) et à haut rendement, ne nécessitant pas de refroidissement forcé et qui sont, en outre, relativement légers.

Selon un mode d'exécution, le manche ou tube de liaison allongé 21 de l'appareil de coupe portatif, est constitué d'au moins deux parties tubulaires assemblées de manière télescopique.

De manière avantageuse, la gestion du fonctionnement du moteur électrique d'actionnement de l'outil de coupe 23, est assurée par une carte électronique située dans la poignée 26 de commande dudit moteur, elle-même installée en partie haute ou partie proximale du manche de l'appareil, comme indiqué ci-dessus.

On comprendra, en se référant aux figures 3, 4 et 5, les notions avant, arrière et latérale, par la position des organes par rapport à l'orientation du harnais en situation de port par l'opérateur. De même pour les notions dorsale, ventrale et frontale, cette dernière notion désignant une direction faisant face à la partie avant du harnais en situation de port par l'opérateur.

Sur les fig.3 à fig.5, l'opérateur porteur du harnais est en situation de travail. La suspente 8 est fixée sur le harnais et soutient le manche 21 de l'appareil 22 par l'intermédiaire de l'organe d'accrochage 17. Sur l'exemple d'application illustré, l'appareil 22 est une faucheuse/débrousailleuse munie d'un outil de coupe 23 rotatif à motorisation électrique. Une telle application, quoique particulièrement adaptée, est citée pour exemple et le harnais de la présente invention est susceptible d'être exploité avec tout type d'appareil à manche long porteur, à une extrémité, d'un outil de coupe.

Sur la fig.3, l'opérateur manoeuvre l'appareil 22, de sorte que l'outil de coupe 23 balaye le sol. Dans cette position, la manoeuvre de l'appareil 22 par l'opérateur est réalisée au moyen des poignées 24 équipant couramment le manche long 22 de l'appareil et par l'intermédiaire du harnais. Dans cette position de travail, l'appareil 22 est porté par l'opérateur latéralement à la manière habituelle. Un organe accessoire d'appui 25 est susceptible d'équiper le manche long 22 pour éviter à l'opérateur de rapprocher l'outil 23 trop près de ses jambes. L'assistance que procure le harnais améliore le confort de l'opérateur, une majeure partie du poids de l'appareil portant de manière répartie sur l'une et l'autre de ses épaules, à partir de la fixation de la suspente 8 sur la partie ventrale 1 en deux points latéralement distants d, et notamment sur l'une et l'autre des bretelles.

Sur la fig.4, l'appareil 22 étant soutenu en balancier par l'intermédiaire de la suspente 8 montée pendulaire sur la partie ventrale 1 du harnais, l'opérateur peut déplacer vers l'avant (F1) l'appareil pour travailler au dessus du sol en effectuant une opération de fauchage comprenant notamment non seulement des mouvements de balayage dans le plan horizontal mais aussi des mouvements ascendants. L'appareil est toujours porté en position latérale par l'opérateur. Le déplacement frontal (F1) de l'appareil autorisé par la suspente 8 grâce à son montage en balancier, permet à l'opérateur d'exploiter le harnais pour le soulager du port à bout de bras de l'appareil 22, le poids de ce dernier étant réparti sur ses épaules.

Sur la fig.5, le soutien en balancier de l'appareil 22 permet à l'opérateur de le placer frontalement (F2), l'opérateur se tenant derrière l'appareil 22 et face à la zone de travail. De même que pour la position de travail illustrée sur la fig.4, le poids de l'appareil 22 est principalement supporté par les épaules de l'opérateur, ses bras étant essentiellement utilisés pour manoeuvrer l'appareil. La faculté offerte à l'opérateur de faire face à la zone de travail en maintenant l'appareil devant lui favorise la vision qui lui est procurée de cette zone de travail. La motorisation électrique de l'outil de coupe 23 permet de placer le moteur d'entraînement au devant de l'opérateur sans induire de gêne, telle qu'une gêne qui serait induite par la chaleur et le bruit du moteur ou le poids de l'ensemble ou encore une échappée de gaz dans le cas d'une motorisation à combustion de l'appareil 22.

## Revendications

1. Harnais pour le portage d'appareils de coupe portatifs comportant un manche de manoeuvre, ce harnais étant du genre comprenant une partie frontale (1) et une partie dorsale (2) reliées par des bretelles (3), au moins ladite partie dorsale étant par ailleurs rattachée à une ceinture (4) destinée à entourer la taille d'un utilisateur, **caractérisé en ce que** la partie frontale (1) comporte une suspente pendulaire (8) présentant la forme générale d'un Y dont les branches supérieures (9, 10) sont reliées ou aptes à être reliées, chacune, à l'une des bretelles (3) par l'intermédiaire de leur extrémité haute et dont la jambe inférieure (11) est munie, à son extrémité inférieure, d'un moyen de liaison (17) permettant l'accrochage en balancier du manche d'un appareil de coupe.

2. Harnais, selon la revendication 1, **caractérisé en ce que** ladite suspente pendulaire est constituée d'au moins trois sangles dont deux sangles supérieures (9, 10) reliées ou aptes à être reliées, chacune, à l'une des bretelles (3), par l'intermédiaire de leur extrémité haute et une troisième sangle inférieure (11) reliant l'extrémité basse des deux sangles supérieures (9, 10) et dont l'extrémité inférieure est munie d'un moyen de liaison (17) permettant de la fixer sur un moyen d'accrochage équipant le manche d'un appareil de coupe.

3. Harnais selon l'une des revendications 1 ou 2, **caractérisé en ce que** les parties composantes (9, 10, 11) de la suspente pendulaire sont rattachées les unes aux autres, par un système de liaison commun (12).

4. Harnais selon la revendication 3, **caractérisé en ce que** le système de liaison commun est constitué par un anneau (12) sur lequel sont fixées, avec une possibilité de glissement, les extrémités adjacentes des trois parties composantes (9, 10, 11) constituant ladite suspente pendulaire.

5. Harnais selon l'une quelconque des revendications 1 à 4, **caractérisé en ce que** la suspente pendulaire (8) est fixée, de manière amovible, sur la partie frontale (1) dudit harnais.

6. Harnais selon l'une quelconque des revendications 1 à 5, **caractérisé en ce que** les éléments supérieurs (9, 10) et/ou l'élément inférieur (11) de la suspente pendulaire (8) sont munis de moyens de réglage (20) permettant un ajustement de leur longueur.

7. Harnais selon l'une quelconque des revendications 1 à 6, **caractérisé en ce que** sa partie dorsale (2) est agencée pour permettre l'installation d'une source d'énergie destinée à assurer l'entraînement du moteur d'actionnement de l'outil de l'appareil de coupe suspendu audit harnais.

8. Harnais, selon l'une quelconque des revendications 1 à 7, **caractérisé en ce que** les branches supérieures (9, 10) de la suspente pendulaire (8) sont constituées des deux brins d'extrémité d'une même sangle qui est montée coulissante sur l'organe de jonction (12).

9. Appareil de coupe portatif comportant un manche (21), un outil de coupe (23) et un moteur électrique installés à l'extrémité distale de ce manche, lequel est muni, dans sa partie intermédiaire, d'un organe de fixation et d'une ou plusieurs poignées de manoeuvre, **caractérisé en ce que** ledit appareil est équipé d'un harnais, selon l'une quelconque des revendications 1 à 8, de sorte à permettre la suspension en balancier dudit appareil à l'extrémité inférieure de la suspente pendulaire (8) dudit harnais.

10. Appareil de coupe portatif selon la revendication 9, **caractérisé en ce que** le manche (21) dudit appareil est constitué d'au moins deux parties assemblées de manière télescopique.

11. Appareil de coupe portatif selon l'une des revendications 9 ou 10, **caractérisé en ce qu'**une carte électronique de gestion du fonctionnement du moteur électrique, est située dans la poignée (24) de commande du moteur installée en partie haute du manche (21) dudit appareil.

## Claims

1. Harness for carrying portable cutting devices having an operating shaft, said harness being of the type comprising a front part (1) and a back part (2) that are interconnected by straps (3), at least the back part also being attached to a belt (4) that wraps around the user's waist, **characterised in that** the front part (1) includes a generally Y-shaped pendular suspension element (8), each of the upper branches (9, 10) of which is or can be connected to one of the straps (3) via its upper end and the lower leg (11) of which has a connecting means (17) at its lower end which can be hooked to the shaft of a cutting device such that the latter can balance.

2. Harness according to claim 1, **characterised in that** said pendular suspension element consists of at least three straps, two of which are two upper straps (9, 10), each of which is or can be connected to one of the straps (3) via its upper end, and a third lower strap (11) connecting to the lower ends of the two upper straps (9, 10), and the lower end of which is provided with a connecting means (17) to attach to a hooking means provided on the shaft of the cutting device.

3. Harness according to one of claims 1 or 2, **characterised in that** the component parts (9, 10, 11) of the pendular suspension element are attached to each other by a common connection system (12).

4. Harness according to claim 3, **characterised in that** that said common connection system consists of a ring (12) on which the adjacent ends of the three component parts (9, 10, 11) forming the pendular suspension element make a sliding attachment.

5. Harness according to any of the claims 1 to 4, **characterised in that** the pendular suspension element (8) is fixed detachably to the front part (1) of said harness.

6. Harness according to any of the claims 1 to 5, **characterised in that** the upper elements (9, 10) and/or the lower element (11) of the pendular suspension element (8) are/is provided with means of adjustment (20) such that their/its length(s) can be adjusted.

7. Harness according to any of the claims 1 to 6, **characterised in that** its back part (2) is arranged so that a power source can be installed intended to provide the driving power to the operating motor of the cutting device suspended from said harness.

8. Harness according to any of the claims 1 to 7, **characterised in that** the upper branches (9, 10) of the pendular suspension element (8) consist of two ends of the same strap which is fitted so that it can slide in the connection system (12).

9. Portable cutting device comprising a shaft (21), a cutting tool (23) and an electric motor installed at the far end of this shaft which is provided in its intermediate section with an attachment element and one or more manoeuvring handles, **characterised in that** said device is equipped with a harness according to any one of the claims 1 to 8 such that said device can balance as it hangs at the lower end of the pendular suspension element (8) of said harness.

10. Portable cutting device according to claim 9, **characterised in that** the shaft (21) of said device consists of at least two parts assembled telescopically.

11. Portable cutting device according to one of the claims 9 or 10, **characterised in that** an electronic board to manage the operation of the electric motor is located in the motor control grip (24) provided on the high part of the shaft (21) of said device.

## Patentansprüche

1. Gurtzeug zum Tragen von tragbaren Schneidgeräten mit einem Betätigungsstiel, wobei dieses Gurtzeug von der Art ist, die einen vorderen Teil (1) und einen Rückenteil (2) aufweist, die durch Schultergurte (3) miteinander verbunden sind, wobei wenigstens der Rückenteil außerdem an einem Gürtel (4) befestigt ist, der dazu bestimmt ist, die Taille eines Benutzers zu umgeben, **dadurch gekennzeichnet, dass** der vordere Teil (1) einen Pendel-Aufhängegurt (8) umfasst, der die allgemeine Form eines Y aufweist, dessen obere Arme (9, 10) über ihr oberes Ende jeweils mit einem der Schultergurte (3) verbunden sind oder geeignet sind, damit verbunden zu werden, und dessen unterer Abschnitt (11) an seinem unteren Ende mit einem Verbindungsmittel (17) ausgestattet ist, das das schwingende Ankoppeln des Stiels eines Schneidgeräts gestattet.

2. Gurtzeug nach Anspruch 1, **dadurch gekennzeichnet, dass** der Pendel-Aufhängegurt aus wenigstens drei Tragriemen besteht, von denen zwei obere Tragriemen (9, 10) jeweils über ihr oberes Ende mit einem der Schultergurte (3) verbunden sind oder geeignet sind, damit verbunden zu werden, und ein dritter unterer Tragriemen (11) das untere Ende der zwei oberen Tragriemen (9, 10) verbindet, wobei dessen unteres Ende mit einem Verbindungsmittel (17) ausgestattet ist, das seine Befestigung an einem Ankopplungsmittel erlaubt, mit dem der Stiel eines Schneidgeräts versehen ist.

3. Gurtzeug nach einem der Ansprüche 1 oder 2, **dadurch gekennzeichnet, dass** die Bestandteile (9, 10, 11) des Pendel-Aufhängegurts mittels eines gemeinsamen Verbindungssystems (12) miteinander verbunden sind.

4. Gurtzeug nach Anspruch 3, **dadurch gekennzeichnet, dass** das gemeinsame Verbindungssystem aus einem Ring (12) gebildet ist, an dem die benachbarten Enden der drei Bestandteile (9, 10, 11), die den Pendel-Aufhängegurt bilden, mit Gleitmöglichkeit befestigt sind.

5. Gurtzeug nach einem der Ansprüche 1 bis 4, **dadurch gekennzeichnet, dass** der Pendel-Aufhängegurt (8) am vorderen Teil (1) des Gurtzeugs abnehmbar befestigt ist.

6. Gurtzeug nach einem der Ansprüche 1 bis 5, **dadurch gekennzeichnet, dass** die oberen Elemente (9, 10) und/oder das untere Element (11) des Pendel-Aufhängegurts (8) mit Einstellmitteln (20) ausgestattet sind, die ein Einstellen ihrer Länge gestatten.

7. Gurtzeug nach einem der Ansprüche 1 bis 6, **dadurch gekennzeichnet, dass** sein Rückenteil (2) dafür eingerichtet ist, den Anbau einer Energiequelle zu gestatten, die dazu bestimmt ist, den Antrieb des Motors zur Betätigung des Werkzeugs des Schneidgeräts sicherzustellen, das an dem Gurtzeug aufgehängt ist.

8. Gurtzeug nach einem der Ansprüche 1 bis 7, **dadurch gekennzeichnet, dass** die oberen Arme (9, 10) des Pendel-Aufhängegurts (8) aus zwei Strangenden eines selben Gurts gebildet werden, der gleitend auf dem Verbindungsorgan (12) montiert ist.

9. Tragbares Schneidgerät mit einem Stiel (21), einem Schneidwerkzeug (23) und einem Elektromotor, die am distalen Ende dieses Stiels installiert sind, der in seinem Mittelteil mit einem Befestigungsorgan und einem oder mehreren Betätigungsgriffen ausgestattet ist, **dadurch gekennzeichnet, dass** das Gerät mit einem Gurtzeug nach einem der Ansprüche 1 bis 8 ausgestattet ist, um die schwingende Aufhängung des Geräts am unteren Ende des Pendel-Aufhängegurts (8) des Gurtzeugs zu gestatten.

10. Tragbares Schneidgerät nach Anspruch 9, **dadurch gekennzeichnet, dass** der Stiel (21) des Geräts aus wenigstens zwei Teilen gebildet wird, die teleskopisch zusammengefügt sind.

11. Tragbares Schneidgerät nach einem der Ansprüche 9 oder 10, **dadurch gekennzeichnet, dass** eine Elektronikkarte zur Steuerung des Betriebs des Elektromotors sich in dem im oberen Teil des Stiels (21) des Geräts installierten Steuergriff (24) des Motors befindet.
